# EUROPEAN PATENT SPECIFICATION

(11) **EP 3 477 841 B1**
(45) Date of publication and mention of the grant of the patent: **29.07.2020**
(21) Application number: 16907231.1
(22) Date of filing: 28.06.2016
(51) Int. Cl.: H02M 7/12, H02M 3/155, H02M 1/42, G05F 1/70, H02M 3/156, H02M 1/12

(54) **POWER SUPPLY DEVICE WITH A POWER FACTOR CORRECTION CIRCUIT, AND METHOD FOR CONTROLLING THAT POWER SUPPLY DEVICE**
STROMVERSORGUNGSVORRICHTUNG MIT LEISTUNGSFAKTORKORREKTUR UND VERFAHREN ZUR STEUERUNG DIESER STROMVERSORGUNGSVORRICHTUNG
DISPOSITIF D'ALIMENTATION ÉLECTRIQUE AVEC UNE AMÉLIORATION DE FACTEUR DE PUISSANCE ET PROCÉDÉ DE COMMANDE DUDIT DISPOSITIF D'ALIMENTATION ÉLECTRIQUE

(43) Date of publication of application: 01.05.2019
(73) Proprietor: Shindengen Electric Manufacturing Co., Ltd., Tokyo 100-0004 (JP)
(72) Inventor: IIJIMA, Shinya, Hanno-shi Saitama 357-8585 (JP); HISADA, Shigeru, Hanno-shi Saitama 357-8585 (JP)
(74) Representative: AWA Sweden AB
(86) International application number: PCT/JP2016/069065
(87) International publication number: WO 2018/002998

(56) References cited:
- JP-A- H06 165 497
- JP-A- 2008 199 896
- JP-A- 2010 068 676
- TW-A- 201 329 667
- US-A1- 2009 257 257

## Description

### [Technical Field]

The present invention relates to a power supply device and a method of controlling a power supply device.

### [Background Art]

Some of conventional power supply devices include a power factor correction (PFC) circuit (for example, see Patent Document 1).

In TW201329667 A1 a tracking boost apparatus and method for a power factor correction is disclosed.

The power factor correction circuit may be controlled by a current detection control method or an on-time control method. In the on-time control method, a current detection threshold value is set based on an input voltage waveform. Therefore, no multiplier is needed, unlike the current detection control method. This provides an advantage in that the circuit area of an integrated circuit for the control operation may be reduced to in turn reduce the costs.

However, the on-time control method has a problem in that the total harmonic distortion (THD) becomes greater than that in the current detection control method.

### [Prior Art Document]

### [Patent Document]

[Patent Document 1] JP 2008-199896 A

### [Summary of the Invention]

### [Problem to be Solved by the Invention]

It is an object of the present invention to provide a power supply device that employs an on-time control method but may reduce the total harmonic distortion.

### [Solution to Problem]

The invention provides two alternative solutions for a power supply device including a power factor correction circuit according to the claims 1 and 6, and corresponding methods of controlling a power supply device including a power factor correction circuit according to the claims 11 and 12. Preferred embodiments are defined in the dependent claims.

### [Effects of the Invention]

A power supply device according to an embodiment in an aspect of the present invention is a power supply device including a power factor correction circuit and configured to supply power to a load, the power supply device comprising: an AC power supply configured to output an AC voltage between a first input terminal and a second input terminal; a rectifier circuit connected between the first input terminal and the second input terminal and configured to output, between a first power supply terminal and a second power supply terminal, a power supply voltage obtained by rectifying the AC voltage supplied from the AC power supply; a first load terminal connected to a high potential side terminal of the load and a second load terminal connected to the second power supply terminal and a low potential side terminal of the load; an input side voltage detection circuit connected between the first power supply terminal and the second power supply terminal, and configured to detect an input side detected voltage based on the power supply voltage; an output side voltage detection circuit connected between the first load terminal and the second load terminal, and configured to detect an output side detected voltage based on an output voltage between the first load terminal and the second load terminal; a primary side winding having one end that is connected to the first power supply terminal, the primary side winding being included in a transformer; a secondary side winding having one end that is connected to the second power supply terminal, the secondary side winding being included in the transformer; a main switch having one end that is connected to another end of the primary side winding and another end that is connected to the second load terminal; an error amplifier configured to output an error voltage based on a difference between the output side detected voltage and a predefined reference voltage; a subtractor configured to output a subtraction result signal based on a result of a subtraction of the input side detected voltage from the error voltage; an output comparator configured to output a comparison result signal based on a result of a comparison between the subtraction result signal and a timer signal; and a flip-flop circuit having a set terminal to which a signal from another end of the secondary side winding is inputted, a reset terminal to which the comparison result signal is inputted, and an output terminal from which a control signal for turning on or off the main switch is outputted.

Thus, the value of the input voltage (power supply voltage) is detected by the input side voltage detection circuit, and the comparative voltage (error voltage) for the comparison with the on timer signal (timer signal) for determining the on time of the main switch SW is decreased depending on the value of the input voltage. As a result, the input voltage waveform (waveform of the power supply voltage) is shaped to reduce the total harmonic distortion.

Thus, the power supply device according to the present invention is capable of employing the on-time control and at the same time reducing the total harmonic distortion.

### [Brief Description of the Drawings]

[FIG. 1] FIG. 1 is a diagram illustrating an example of a configuration of a power supply device 100 according to a first embodiment in an aspect of the present invention.
[FIG. 2] FIG. 2 is a diagram illustrating an example of a specific configuration of a subtractor Z included in the power supply device 100 shown in FIG. 1.
[FIG. 3] FIG. 3 is a diagram illustrating an example of a specific configuration of a timer circuit TC included in the power supply device 100 shown in FIG. 1.
[FIG. 4] FIG. 4 is a waveform diagram showing an example of operational waveforms of the power supply device 100 shown in FIG. 1.
[FIG. 5] FIG. 5 is a diagram illustrating an example of a configuration of a power supply device 200 according to a second embodiment in an aspect of the present invention.
[FIG. 6] FIG. 6 is a diagram illustrating an example of a specific configuration of a timer circuit TC2 included in the power supply device 200 shown in FIG. 5.
[FIG. 7] FIG. 7 is a diagram illustrating an example of a specific configuration of an adder Z2 included in the power supply device 200 shown in FIG. 5.
[FIG. 8] FIG. 8 is a waveform diagram showing an example of respective waveforms of the power supply device 200 shown in FIG. 5.

### [Embodiments for Carrying Out the Invention]

Embodiments of the present invention will now be described with reference to the accompanying drawings.

### [First embodiment]

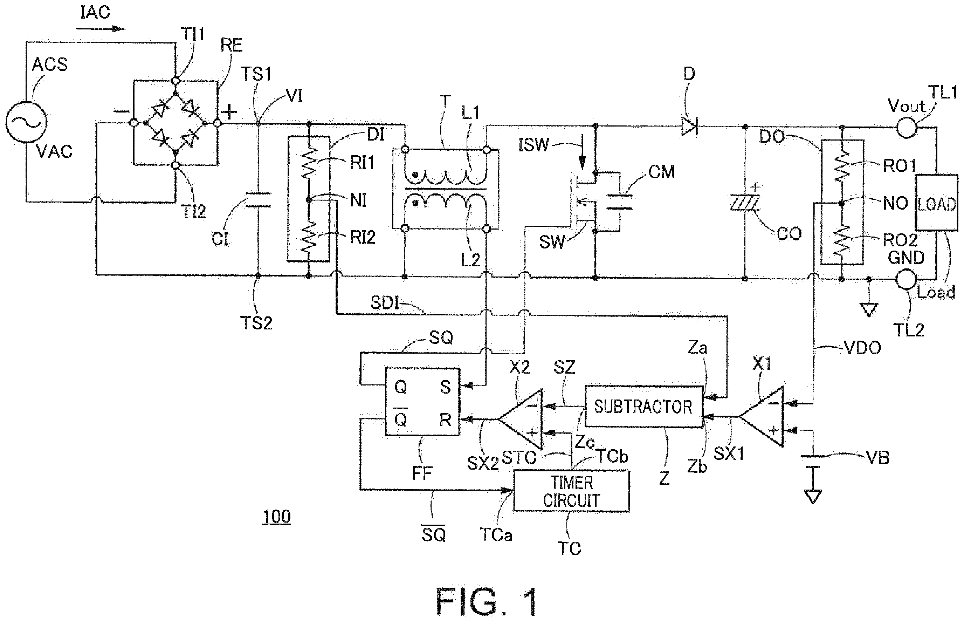

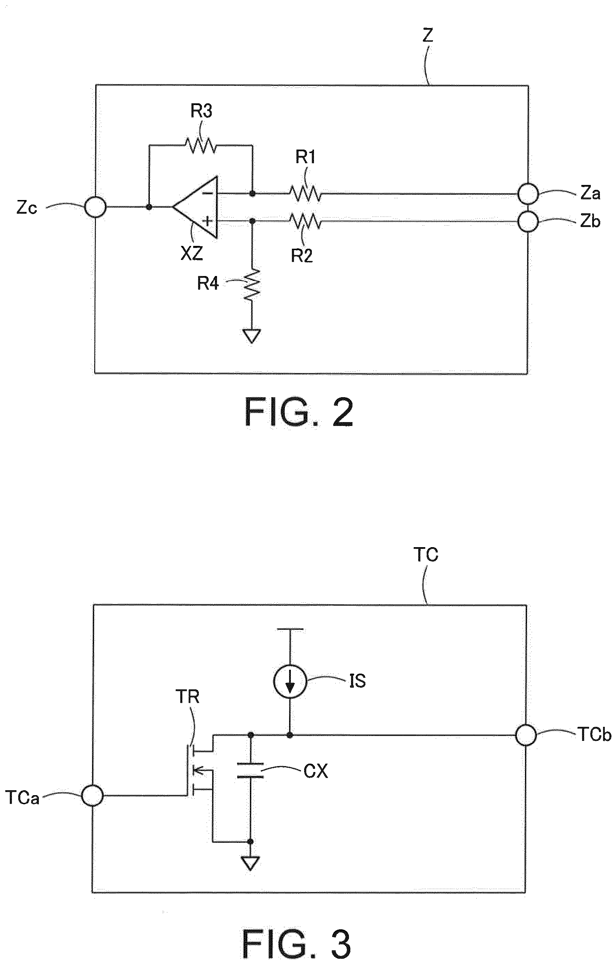

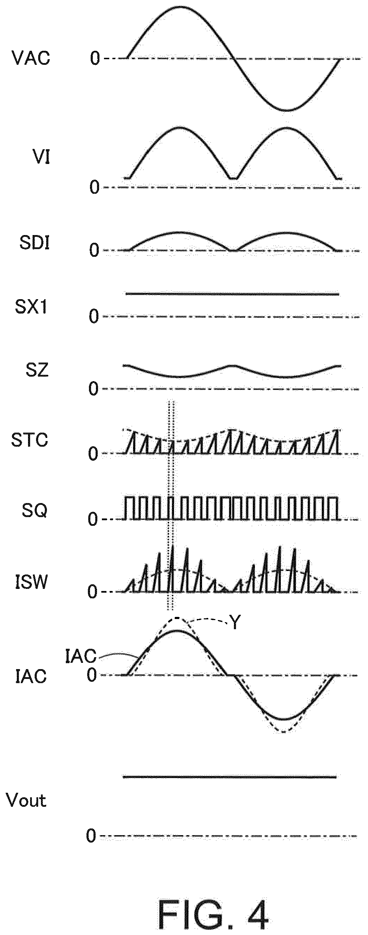

FIG. 1 is a diagram illustrating an example of a configuration of a power supply device 100 according to a first embodiment in an aspect of the present invention. FIG. 2 is a diagram illustrating an example of a specific configuration of a subtractor Z included in the power supply device 100 shown in FIG. 1. FIG. 3 is a diagram illustrating an example of a specific configuration of a timer circuit TC included in the power supply device 100 shown in FIG. 1. FIG. 4 is a waveform diagram showing an example of operational waveforms of the power supply device 100 shown in FIG. 1.

As shown in FIG. 1, for example, the power supply device 100 includes a power factor correction circuit and supplies power to a load Load.

The power supply device 100 includes an AC power supply ACS, a first input terminal TI1, a second input terminal TI2, a rectifier circuit RE, a first power supply terminal TS1, a second power supply terminal TS2, an input capacitor CI, a first load terminal TL1, a second load terminal TL2, an input side voltage detection circuit DI, an output side voltage detection circuit DO, an output capacitor CO, a transformer T (primary side winding L1, secondary side winding L2), a rectifier element D, a main switch SW, a subtractor Z, an output comparator X2, a flip-flop circuit FF, a timer circuit TC and an error amplifier X1, as shown in FIG. 1.

For example, the AC power supply ACS outputs an AC voltage VAC (FIG. 4) between the first input terminal TI1 and the second input terminal TI2.

The rectifier circuit RE is connected between the first input terminal TI1 and the second input terminal TI2, as shown in, for example, FIG. 1. The rectifier circuit RE outputs a power supply voltage VI (FIG. 4), which is obtained by rectifying the AC voltage VAC supplied from the AC power supply ACS, between the first power supply terminal TS1 and the second power supply terminal TS2.

The first load terminal TL1 is connected to a high potential side terminal of the load Load, as shown in, for example, FIG. 1.

The second load terminal TL2 is connected to the second power supply terminal TS2 and a low potential side terminal of the load Load, as shown in, for example, FIG. 1. The second load terminal TL2 is also grounded.

The input side voltage detection circuit DI is connected to the first power supply terminal TS1 and the second power supply terminal TS2. The input side voltage detection circuit DI detects an input side detected voltage SDI based on a power supply voltage VI between the first power supply terminal TS1 and the second power supply terminal TS2, and outputs the input side detected voltage SDI from an input side voltage dividing node NI. The input side detected voltage SDI here is a divided voltage of the power supply voltage VI (FIG. 4), as shown in, for example, FIG. 1.

The input side voltage detection circuit DI includes a first input side voltage dividing resistor RI1 and a second input side voltage dividing resistor RI2, as shown in, for example, FIG. 1.

The first input side voltage dividing resistor RI1 has one end that is connected to the first power supply terminal TS1 and another end that is connected to the input side voltage dividing node NI.

The second input side voltage dividing resistor RI2 has one end that is connected to the second power supply terminal TS2 and another end that is connected to the input side voltage dividing node NI.

Thus, the input side voltage detection circuit DI is an input side voltage dividing circuit, which outputs an input side detected voltage SDI to the input side voltage dividing node NI, the input side detected voltage SDI being the divided voltage of the power supply voltage VI,.

The output side voltage detection circuit DO is connected to the first load terminal TL1 and the second load terminal TL2. The output side voltage detection circuit DO detects an output side detected voltage VDO based on an output voltage Vout between the first load terminal TL1 and the second load terminal TL2, and outputs the output side detected voltage VDO from an output side voltage dividing node NO. The output side detected voltage VDO here is a divided voltage of the output voltage Vout between the first load terminal TL1 and the second load terminal TL2, as shown in, for example, FIG. 1.

The output side voltage detection circuit DO includes a first output side voltage dividing resistor RO1 and a second output side voltage dividing resistor RO2, as shown in, for example, FIG. 1.

The first output side voltage dividing resistor RO1 has one end that is connected to the first load terminal TL1 and another end that is connected to the output side voltage dividing node NO.

The second output side voltage dividing resistor RO2 has one end that is connected to the second load terminal TL2 and another end that is connected to the output side voltage dividing node NO.

Thus, the output side voltage detection circuit DO is an output side voltage dividing circuit, which outputs the output side detected voltage VDO from the output side voltage dividing node NO, the output side detected voltage VDO being the divided voltage of the output voltage Vout,.

The output capacitor CO is connected to the first load terminal TL1 and the second load terminal TL2. The output capacitor CO smoothies the output voltage Vout.

The primary side winding L1 has one end that is connected to the first power supply terminal TS1. The primary side winding L1 is included in the transformer T.

The secondary side winding L2 has one end that is connected to the second power supply terminal TS2. The secondary side winding L2 is included in the transformer T together with the primary side winding L1.

The rectifier element D has one end that is connected to another end of the primary side winding L1 and another end that is connected to the first load terminal TL1. A direction from the other end of the primary side winding L1 to the first load terminal TL1 is the forward direction of the rectifier element D.

The rectifier element D is a diode having an anode that is connected to the other end of the primary side winding L1 and a cathode that is connected to the first load terminal TL1, as shown in, for example, FIG. 1.

The main switch SW has one end that is connected to the other end of the primary side winding L1 and another end that is connected to the second load terminal TL2. The main switch SW is turned on or off by a pulse signal SQ, which is a control signal.

As shown in FIG. 1 for example, the main switch SW is an nMOS transistor having a drain that is connected to the other end of the primary side winding L1, a source that is connected to the second load terminal TL2, and a gate to which the pulse signal SQ is applied. The main switch SW is turned on when the pulse signal SQ shown in FIG. 4 is at a "High" level, and turned off when the pulse signal SQ is at a "Low" level, for example. Although the main switch SW is the nMOS transistor in this embodiment, such a device as a SiC power device, a GaN power device, a silicon power device, or an IGBT may also be used as the main switch SW.

A control capacitor CM is provided, which has one end that is connected to one end (drain) of the main switch SW and another end that is connected to another end (source) of the main switch SW.

The error amplifier X1 outputs an error voltage SX1 that is based on a difference between the output side detected voltage VDO and a predefined reference voltage VB.

The error amplifier X1 has an inverting input terminal to which the output side detected voltage VDO is supplied, and a non-inverting input terminal to which the reference voltage VB is supplied, as shown in, for example, FIG. 1.

In the example of FIG. 4, the error voltage SX1 outputted from the error amplifier X1 is constant since the output voltage Vout (output side detected voltage VDO) is constant.

The subtractor Z outputs a subtraction result signal SZ based on a result of a subtraction of the input side detected voltage SDI from the error voltage SX1 (FIG. 4).

The subtractor Z includes an amplifier XZ, a first resistor R1, a second resistor R2, a third resistor R3, and a fourth resistor R4, as shown in, for example, FIG. 2.

The first resistor R1 has one end that is connected to the input side voltage dividing node NI of the input side voltage detection circuit DI (an input terminal Za of the subtractor Z).

The second resistor R2 has one end that is connected to an output terminal of the error amplifier X1 (an input terminal Zb of the subtractor Z).

The amplifier XZ has an inverting output terminal that is connected to another end of the first resistor R1, a non-inverting input terminal that is connected to another end of the second resistor R2, and an output terminal that is connected to an inverting input terminal of the output comparator X2 (an output terminal Zc of the subtractor Z).

The third resistor R3 has one end that is connected to the inverting input terminal of the amplifier XZ and another end that is connected to the output terminal of the amplifier XZ.

The fourth resistor R4 has one end that is connected to the non-inverting input terminal of the amplifier XZ and another end that is grounded.

As described above, the subtractor Z having the configuration shown in FIG. 2 outputs, from the output terminal Zc, the subtraction result signal SZ obtained by subtracting the input side detected voltage SDI supplied to the input terminal Za from the error voltage SX1 supplied to the input terminal Zb.

The output comparator X2 outputs a comparison result signal SX2 based on a result of a comparison between the subtraction result signal SZ and a timer signal STC.

The output comparator X2 has a non-inverting input terminal, to which the timer signal STC is supplied from an output terminal TCb of the timer circuit TC, and an inverting input terminal, to which the subtraction result signal SZ is supplied from the output terminal Zc of the subtractor Z, as shown in, for example, FIG. 1.

If, for example, the voltage of the timer signal STC is less than the voltage of the subtraction result signal SZ, the output comparator X2 outputs the comparison result signal SX2 at a "Low" level. If the voltage of the timer signal STC is equal to or greater than the voltage of the subtraction result signal SZ, the output comparator X2 outputs the comparison result signal SX2 at a "High" level.

The flip-flop circuit FF has a set terminal S that is connected to another terminal of the secondary side winding L2 and a reset terminal R that is connected to an output terminal of the output comparator X2. The set terminal S of the flip-flop circuit FF receives a signal from the other end of the secondary side winding L2 and the reset terminal R receives the comparison result signal SX2 from the output comparator X2. The signal from the other end of the secondary side winding L2 varies depending on the current flowing through the primary side winding L1 (a current ISW (FIG. 4) flowing through the main switch SW).

The flip-flop circuit FF also has a non-inverted output terminal Q that is connected to a control terminal (gate) of the main switch SW, and an inverted output terminal /Q that is connected to an input terminal TCa of the timer circuit TC. The flip-flop circuit FF outputs a pulse signal SQ for turning on or off the main switch SW from the output terminal Q, and an inverted signal /SQ from the inverted output terminal /Q.

The timer circuit TC outputs the timer signal STC based on the inverted signal /SQ obtained by inverting the logic of the pulse signal SQ.

The timer circuit TC includes a constant current source IS, a switch (timer switch) TR, and a timer capacitor CX, as shown in, for example, FIG. 3.

The constant current source IS has an output terminal that is connected to the non-inverting input terminal of the output comparator X2 (the output terminal TCb of the timer circuit TC) and outputs a constant current.

The switch TR is an nMOS transistor (hereinafter, the "switch TR" may also be referred to as the "nMOS transistor TR"), having a drain that is connected to the non-inverting input terminal of the output comparator X2, a source that is grounded, and a gate that is connected to the inverted output terminal /Q of the flip-flop circuit FF (the input terminal TCa of the timer circuit TC). Although the switch TR is the nMOS transistor in this embodiment, such a device as a SiC power device, a GaN power device, a silicon power device, or an IGBT may also be used as the switch TR.

The timer capacitor CX has one end that is connected to the drain of the nMOS transistor TR (the output terminal TCb of the timer circuit TC).

Although the timer circuit TC has the above described configuration in this embodiment, a timer resistor, for example, may also be provided, which has one end that is connected to another end of the timer capacitor CX and another end that is connected to the source of the nMOS transistor TR (grounded). A power supply voltage may be provided instead of the timer resistor. The timer resistor or the power supply voltage may be provided between the ground and a connection point of the source of the nMOS transistor TR and the timer capacitor CX.

As shown in FIG. 4 for example, while the nMOS transistor TR is in the off state due to the inverted signal /SQ ("Low" level), the timer circuit TC outputs the timer signal STC depending on the voltage charged by the timer capacitor CX by the constant current outputted from the constant current source IS. When the nMOS transistor TR is turned on by the pulse of the inverted signal /SQ ("High" level), the electric charge of the timer capacitor CX is discharged and reset, and the timer signal STC is set at the ground voltage.

An example of an operation of the power supply device 100 having the above-described configuration will be described below.

For example, as described above, the error amplifier X1 outputs the error voltage SX1 based on the difference between the output side detected voltage VDO and the predefined reference voltage VB. In the example of FIG. 4, the error voltage SX1 outputted from the error amplifier X1 is constant since the output voltage Vout (output side detected voltage VDO) is constant.

The subtractor Z outputs, from the output terminal Zc, the subtraction result signal SZ obtained by subtracting the input side detected voltage SDI supplied to the input terminal Za from the error voltage SX1 supplied to the input terminal Zb (FIG. 4).

The output comparator X2 outputs the comparison result signal SX2 based on the comparison between the subtraction result signal SZ and the timer signal STC.

The flip-flop circuit FF receives, at the set terminal S, the signal from the other end of the secondary side winding L2 (signal that is dependent on the current ISW), receives, at the reset terminal R, the comparison result signal SX2, and outputs the pulse signal SQ for turning on or off the main switch SW and the inverted signal /SQ for controlling the timer signal STC.

Thus, the value of the input voltage (power supply voltage VI) is detected by the input side voltage detection circuit DI, and the comparative voltage (error voltage SX1) used for the comparison with an on timer signal (timer signal STC) used for determining the on time of the main switch SW is decreased depending on the value of the input voltage. As a result, the input voltage waveform (waveform of the power supply voltage VI) is shaped to reduce the total harmonic distortion (FIG. 4).

Thus, the power supply device 100 is capable of employing the on-time control and at the same time reducing the total harmonic distortion.

As described above, a power supply device in an aspect of the present invention includes an AC power supply ACS configured to output an AC voltage VAC between a first input terminal TI1 and a second input terminal TI2, a rectifier circuit RE connected between the first input terminal TI1 and the second input terminal TI2 and configured to output a power supply voltage VI, which is obtained by rectifying the AC voltage VAC supplied from the AC power supply ACS, between a first power supply terminal TS1 and a second power supply terminal TS2, an input capacitor CI connected between the first power supply terminal TS1 and the second power supply terminal TS2, a first load terminal TL1 connected to a high potential side terminal of a load Load, a second load terminal TL2 connected to the second power supply terminal TS2 and a low potential side terminal of the load Load, a input side voltage detection circuit DI connected between the first power supply terminal TS1 and the second power supply terminal TS2 and configured to detect an input side detected voltage SDI based on a power supply voltage VI, an output side voltage detection circuit DO connected between the first load terminal TL1 and the second load terminal TL2 and configured to detect an output side detected voltage VDO based on an output voltage between the first load terminal TL1 and the second load terminal TL2, an output capacitor connected between the first load terminal TL1 and the second load terminal TL2, a primary side winding L1 having one end that is connected to the first power supply terminal TS1, the primary side winding L1 being included in a transformer, a rectifier element D having one end that is connected to another end of the primary side winding L1 and another end that is connected to the first load terminal TL1, a forward direction of the rectifier element D being from the other end of the primary side winding L1 to the first load terminal TL1, a secondary side winding L2 having one end that is connected to the second power supply terminal TS2, the secondary side winding L2 being included in the transformer, a main switch SW having one end that is connected to the other end of the primary side winding L1 and another end that is connected to the second load terminal TL2, an error amplifier X1 configured to output an error voltage SX1 based on a difference between an input side detected voltage SDI and a predefined reference voltage, a subtractor Z configured to output a subtraction result signal SZ based on a result of a subtraction of the output side detected voltage VDO from the error voltage SX1, an output comparator X2 configured to output a comparison result signal SX2 based on a result of a comparison between the subtraction result signal SZ and a timer signal STC, a flip-flop circuit FF having a set terminal to which a signal from the other end of the secondary side winding L2 is inputted, a reset terminal to which the comparison result signal SX2 is inputted, and an output terminal from which a pulse signal SQ for turning on or off the main switch SW is outputted, and a timer circuit TC configured to output a timer signal STC based on an inverted signal that is obtained by inverting a logic of the pulse signal SQ.

Thus, the value of the input voltage (power supply voltage VI) is detected by the input side voltage detection circuit DI, and the comparative voltage (error voltage SX1) for the comparison with the on timer signal (timer signal STC) for determining the on time of the main switch SW is decreased depending on the value of the input voltage. As a result, the input voltage waveform (waveform of the power supply voltage VI) is shaped to reduce the total harmonic distortion.

Thus, the power supply device according to the present invention is capable of employing the on-time control and at the same time reducing the total harmonic distortion.

### [Second Embodiment]

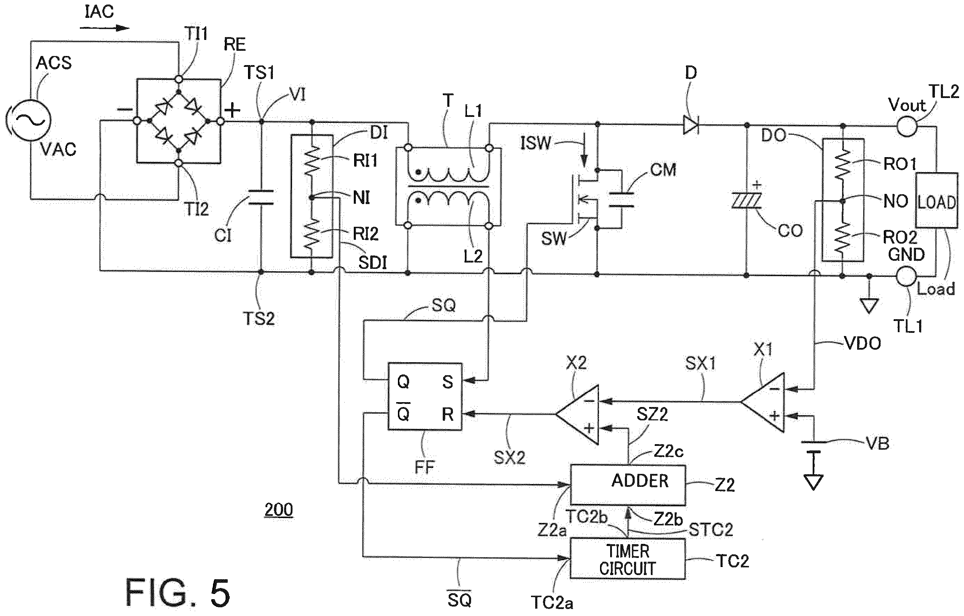

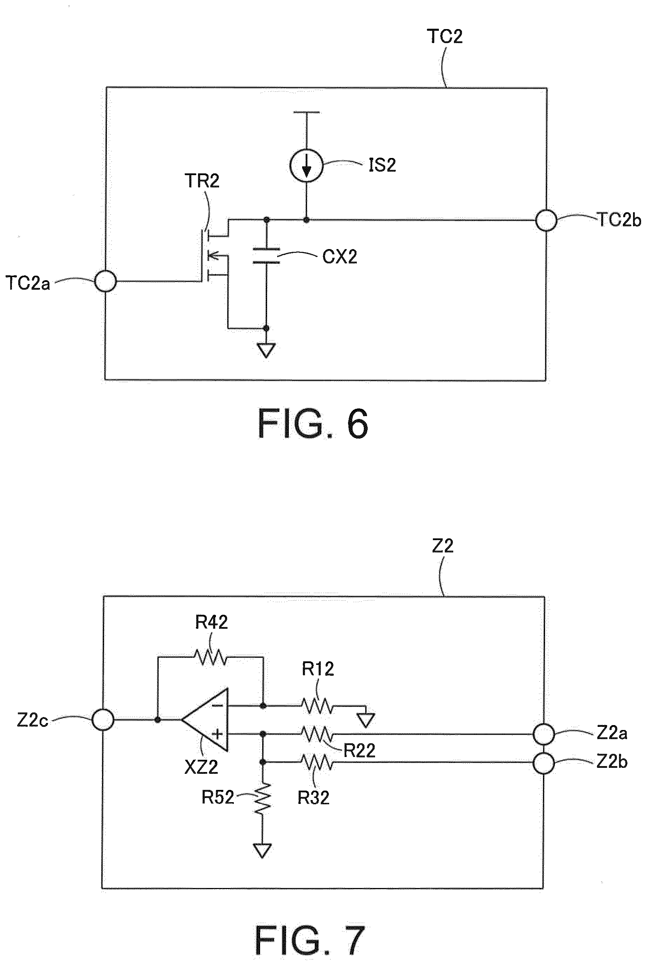

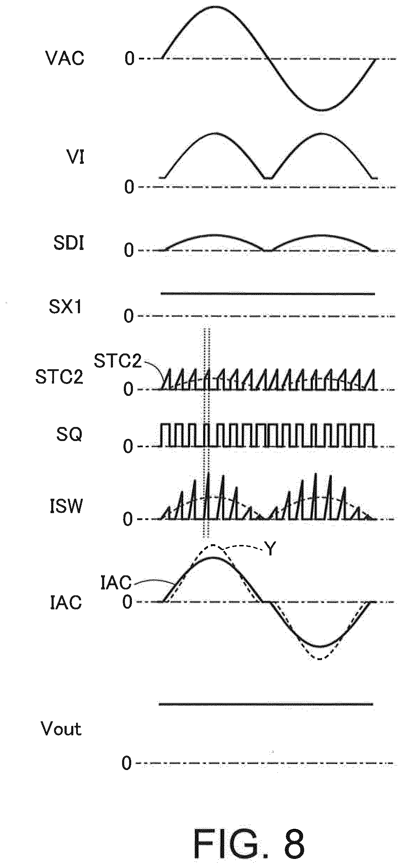

FIG. 5 is a diagram illustrating an example of a configuration of a power supply device 200 according to a second embodiment in an aspect of the present invention. FIG. 6 is a diagram illustrating an example of a specific configuration of a timer circuit TC2 included in the power supply device 200 shown in FIG. 5. FIG. 7 is a diagram illustrating an example of a specific configuration of an adder Z2 included in the power supply device 200 shown in FIG. 5. FIG. 8 is a waveform diagram showing an example of respective waveforms of the power supply device 200 shown in FIG. 5. In FIG. 5, the reference numerals that are the same as those in FIG. 1 indicate the same elements as the first embodiment.

As shown in FIG. 5, the power supply device 200 includes an AC power supply ACS, a first input terminal TI1, a second input terminal TI2, a rectifier circuit RE, a first power supply terminal TS1, a second power supply terminal TS2, an input capacitor CI, a first load terminal TL1, a second load terminal TL2, an input side voltage detection circuit DI, an output side voltage detection circuit DO, an output capacitor CO, a transformer T (primary side winding L1 and secondary side winding L2), a rectifier element D, a main switch SW, an adder Z2, an output comparator X2, a flip-flop circuit FF, a timer circuit TC2, and an error amplifier X1.

Specifically, the power supply device 200 according to the second embodiment shown in FIG. 5 includes the adder Z2 instead of the subtractor Z of the power supply device 100 shown in FIG. 1.

The error amplifier X1 outputs an error voltage SX1 based on a difference between an output side detected voltage VDO and a predefined reference voltage VB.

As shown in FIG. 5 for example, the error amplifier X1 has an inverting input terminal to which the output side detected voltage VDO is supplied, and a non-inverting input terminal to which the reference voltage VB is supplied.

In the example of FIG. 8, the error voltage SX1 outputted from the error amplifier X1 is constant since the output voltage Vout (output side detected voltage VDO) is constant.

The timer circuit TC2 outputs a timer signal STC2 based on an inverted signal /SQ obtained by inverting the logic of a pulse signal SQ, which is a control signal.

As shown in FIG. 6, for example, the timer circuit TC2 includes a constant current source IS2, a switch (timer switch) TR2, and a timer capacitor CX2.

The constant current source IS2 has an output terminal that is connected to an input terminal of the adder Z2 (an output terminal TC2b of the timer circuit TC2) and outputs a constant current.

The switch TR2 is an nMOS transistor (hereinafter, the "switch TR2" may also be referred to as the "nMOS transistor TR2") having a drain that is connected to the input terminal of the adder Z2, a source that is grounded, and a gate that is connected to an inverted output terminal /Q of the flip-flop circuit FF (an input terminal TC2a of the timer circuit TC2). Although the switch TR2 is the nMOS transistor in this embodiment, such a device as a SiC power device, a GaN power device, a silicon power device, or an IGBT may also be used as the switch TR2.

The timer capacitor CX2 has one end that is connected to the drain of the nMOS transistor TR2 (the output terminal TC2b of the timer circuit TC2).

A timer resistor, for example, may be provided to the timer circuit TC2 of this embodiment, the timer resistor having one end that is connected to another end of the timer capacitor CX2 and another end that is connected to the source of the nMOS transistor TR2 (grounded). A power supply voltage may be provided instead of the timer resistor. The timer resistor or the power supply voltage may be provided between the ground and a connection point of the source of the nMOS transistor TR2 and the timer capacitor CX2.

As shown in FIG. 8, for example, while the nMOS transistor TR2 is in the off state due to the inverted signal /SQ ("Low" level), the timer circuit TC2 outputs the timer signal STC2 depending on the voltage charged by the timer capacitor CX2 by the constant current outputted from the constant current source IS2. When the nMOS transistor TR2 is turned on by the pulse of the inverted signal /SQ ("High" level), the electric charge of the timer capacitor CX2 is discharged and reset, and the timer signal STC2 is set at the ground voltage .

The adder Z2 outputs an addition result signal SZ2 based on a result of the addition of the timer signal STC2 and the input side detected voltage SDI.

As shown in FIG. 7, for example, the adder Z2 includes a first resistor R12, a second resistor R22, a third resistor R32, a fourth resistor R42, an amplifier XZ2, and a fifth resistor R52.

The first resistor R12 has one end that is grounded.

The second resistor R22 has one end that is connected to an input side voltage dividing node NI of the input side voltage detection circuit DI (an input terminal Z2a of the adder Z2).

The third resistor R32 has one end that is connected to an output terminal of the timer circuit TC2 (an input terminal Z2b of the adder Z2).

The amplifier XZ2 has an inverting input terminal that is connected to another end of the first resistor R12, a non-inverting input terminal that is connected to another end of the second resistor R22 and another end of the third resistor R32, and an output terminal that is connected to the non-inverting input terminal of the output comparator X2 (an output terminal Z2c of the adder Z2).

The fourth resistor R42 has one end that is connected to the inverting input terminal of the amplifier XZ2 (the other end of the first resistor R12) and another end that is connected to the output terminal of the amplifier XZ2 (the output terminal Z2c of the adder Z2).

The fifth resistor R52 has one end that is connected to the non-inverting input terminal of the amplifier XZ2 (the other end of the second resistor R22 and the other end of the third resistor R32) and another end that is grounded.

As described above, the adder Z2 having the configuration shown in FIG. 7 outputs from the output terminal Z2c the addition result signal SZ2 obtained by adding the input side detected voltage SDI supplied to the input terminal Z2a and the timer signal STC supplied to the input terminal Z2b.

The output comparator X2 outputs a comparison result signal SX2 based on a result of the comparison between the addition result signal SZ2 and the error voltage SX1.

The output comparator X2 has a non-inverting input terminal to which the addition result signal SZ2 is supplied via the output terminal Z2c of the adder Z2, and an inverting input terminal to which the error voltage SX1 outputted from the output comparator X1 is supplied.

For example, the output comparator X2 outputs the comparison result signal SX2 at a "Low" level when the voltage of the addition result signal SZ2 is less than the voltage of the error voltage SX1. The output comparator X2 outputs the comparison result signal SX2 at a "High" level when the voltage of the addition result signal SZ2 is equal to or greater than the voltage of the error voltage SX1.

As shown in FIG. 5, for example, the flip-flop circuit FF has a set terminal S that is connected to another end of the secondary side winding L2 and a reset terminal R that is connected to an output terminal of the output comparator X2. The flip-flop circuit FF receives a signal from the other end of the secondary side winding L2 at the set terminal S, and the comparison result signal SX2 from the output comparator X2 at the reset terminal R. The signal from the other end of the secondary side winding L2 varies depending on a current flowing through the primary side winding L1 (current ISW (FIG. 8) flowing through the main switch SW).

The flip-flop circuit FF further has a non-inverted output terminal Q that is connected to a control terminal (gate) of the main switch SW, and an inverted output terminal /Q that is connected to an input terminal TCa of the timer circuit TC. The flip-flop circuit FF outputs a pulse signal SQ for turning on or off the main switch SW from the non-inverted output terminal Q, and an inverted signal /SQ from the inverted output terminal /Q.

The other elements of the power supply device 200 are the same as those in the power supply device 100 according to the first embodiment shown in FIG. 1.

An example of an operation of the power supply device 200 having the above-described configuration will be described below.

For example, as described above, the error amplifier X1 outputs the error voltage SX1 based on the difference between the output side detected voltage VDO and the predefined reference voltage VB. In the example of FIG. 8, the error voltage SX1 outputted from the error amplifier X1 is constant since the output voltage Vout (output side detected voltage VDO) is constant.

The adder Z2 outputs the addition result signal SZ2 based on the result of the addition of the timer signal STC2 and the input side detected voltage SDI.

The output comparator X2 outputs the comparison result signal SX2 based on the result of the comparison between the addition result signal SZ2 and the error voltage SX1.

The flip-flop circuit FF receives the signal from the other end of the secondary side winding L2 (the signal depending on the current ISW) at the set terminal S, receives the comparison result signal SX2 at the reset terminal R, outputs the pulse signal SQ for turning on or off the main switch SW, and outputs the inverted signal /SQ for controlling the timer signal STC.

Thus, the value of the input voltage (power supply voltage VI) is detected by the input side voltage detection circuit DI, and an addition is performed on an on timer signal (timer signal STC) for determining the on time of the main switch SW, which is compared with the comparative voltage (error voltage SX1), based on the value of the input voltage. As a result, the input voltage waveform (waveform of power supply voltage VI) is shaped to reduce the total harmonic distortion (FIG. 8).

Thus, the power supply device 200 according to this embodiment employs an on-time control and at the same time reduces the total harmonic distortion, like the first embodiment.

### [Explanation of References]

- 100, 200:: power supply device
- ACS:: AC power supply
- TI1:: first input terminal
- TI2:: second input terminal
- RE:: rectifier circuit
- TS1:: first power supply terminal
- TS2:: second power supply terminal
- CI:: input capacitor
- TL1:: first load terminal
- TL2:: second load terminal
- DI:: input side voltage detection circuit
- DO:: output side voltage detection circuit
- CO:: output capacitor
- T:: transformer
- L1:: primary side winding
- L2:: secondary side winding
- D:: rectifier element
- SW:: main switch
- Z:: subtractor
- Z2:: adder
- X2:: output comparator
- FF:: flip-flop circuit
- TC:: timer circuit
- X1:: error amplifier

## Claims

1. A power supply device (100, 200) including a power factor correction circuit and configured to supply power to a load, the power supply device comprising:
an AC power supply (ACS) configured to output an AC voltage between a first input terminal (TI1) and a second input terminal (TI2);
a rectifier circuit (RE) connected between the first input terminal (TI1) and the second input terminal (TI2) and configured to output, between a first power supply terminal (TS1) and a second power supply terminal (TS2), a power supply voltage obtained by rectifying the AC voltage supplied from the AC power supply (ACS);
a first load terminal (TL1) connected to a high potential side terminal of the load and a second load terminal (TL2) connected to the second power supply terminal (TS2) and a low potential side terminal of the load;
an input side voltage detection circuit (DI) connected between the first power supply terminal (TS1) and the second power supply terminal (TS2), and configured to detect an input side detected voltage based on the power supply voltage;
an output side voltage detection circuit (DO) connected between the first load terminal (TL1) and the second load terminal (TL2), and configured to detect an output side detected voltage based on an output voltage between the first load terminal (TL1) and the second load terminal (TL2);
a primary side winding (L1) having one end that is connected to the first power supply terminal (TS1), the primary side winding (L1) being included in a transformer (T);
a secondary side winding (L2) having one end that is connected to the second power supply terminal (TS2), the secondary side winding (L2) being included in the transformer (T);
a main switch (SW) having one end that is connected to another end of the primary side winding (L1) and another end that is connected to the second load terminal (TL2);
**characterized in that**
an error amplifier (X1) configured to output an error voltage based on a difference between the output side detected voltage and a predefined reference voltage;
a subtractor (Z) configured to output a subtraction result signal based on a result of a subtraction of the input side detected voltage from the error voltage;
an output comparator (X2) configured to output a comparison result signal based on a result of a comparison between the subtraction result signal and a timer signal; and
a flip-flop circuit (FF) having a set terminal to which a signal from another end of the secondary side winding (L2) is inputted, a reset terminal to which the comparison result signal is inputted, and an output terminal from which a control signal for turning on or off the main switch (SW) is outputted.

2. The power supply device (100, 200) according to claim 1, further comprising a timer circuit (TC) configured to output the timer signal based on the control signal.

3. The power supply device (100, 200) according to claim 2, wherein the timer circuit (TC) includes:
a constant current source having an output terminal connected to an non-inverting input terminal of the output comparator (X2), the constant current source being configured to output a constant current;
a timer switch having an input/output terminal that is connected to the non-inverting input terminal of the output comparator (X2), another input/output terminal that is grounded, and a control terminal that is connected to an inverted output terminal of the flip-flop circuit; and
a timer capacitor having one end that is connected to the input/output terminal of the timer switch.

4. The power supply device (100, 200) according to claim 1, wherein the subtractor (Z) includes:
a first resistor having one end that is connected to the input side voltage detection circuit (DI);
a second resistor having one end that is connected to an output terminal of the error amplifier (X1);
an amplifier having an inverting input terminal that is connected to another end of the first resistor, a non-inverting input terminal that is connected to another end of the second resistor, and an output terminal that is connected to an inverting input terminal of the output comparator (X2);
a third resistor having one end that is connected to the inverting input terminal of the amplifier and another end that is connected to the output terminal of the amplifier; and
a fourth resistor having one end that is connected to the non-inverting input terminal of the amplifier and another end that is grounded.

5. The power supply device (100, 200) according to claim 1, wherein the input side voltage detection circuit (DI) is an input side voltage dividing circuit connected between the first power supply terminal (TS1) and the second power supply terminal, and configured to output the input side detected voltage, which is a divided voltage of the power supply voltage, from an input side voltage dividing node, the input side voltage dividing circuit including:
a first input side voltage dividing resistor having one end that is connected to the first power supply terminal (TS1) and another end that is connected to the input side voltage dividing node; and
a second input side voltage dividing resistor having one end that is connected to the second power supply terminal and another end that is connected to the input side voltage dividing node, and
wherein the output side voltage detection circuit (DO) is an output side voltage dividing circuit connected between the first load terminal and the second load terminal, and configured to output the output side detected voltage, which is a divided voltage of the output voltage between the first load terminal (TL1) and the second load terminal, from an output side voltage dividing node, the output side voltage dividing circuit including:
a first output side voltage dividing resistor having one end that is connected to the first load terminal (TL1) and another end that is connected to the output side voltage dividing node; and
a second output side voltage dividing resistor having one end that is connected to the second load terminal (TL2) and another end that is connected to the output side voltage dividing node.

6. A power supply device (100, 200) including a power factor correction circuit and configured to supply power to a load, the power supply device (100, 200) comprising:
an AC power supply configured to output an AC voltage between a first input terminal (TI1) and a second input terminal;
a rectifier circuit (RE) connected between the first input terminal (TI1) and the second input terminal (TI2) and configured to output, between a first power supply terminal (TS1) and a second power supply terminal, a power supply voltage obtained by rectifying the AC voltage supplied from the AC power supply;
a first load terminal (TL1) connected to a high potential side terminal of the load and a second load terminal (TL2) connected to the second power supply terminal and a low potential side terminal of the load;
an input side voltage detection circuit (DI) connected between the first power supply terminal (TS1) and the second power supply terminal, and configured to detect an input side detected voltage based on the power supply voltage;
an output side voltage detection circuit (DO) connected between the first load terminal (TL1) and the second load terminal, and configured to detect an output side detected voltage based on an output voltage between the first load terminal (TL1) and the second load terminal;
a primary side winding (L1) having one end that is connected to the first power supply terminal, the primary side winding (L1) being included in a transformer (T);
a secondary side winding (L2) having one end that is connected to the second power supply terminal, the secondary side winding (L2) being included in the transformer (T);
a main switch (SW) having one end that is connected to another end of the primary side winding (L1) and another end that is connected to the second load terminal;
**characterized in that**
an error amplifier (X1) configured to output an error voltage based on a difference between the output side detected voltage and a predefined reference voltage;
an adder (Z2) configured to output an addition result signal based on a result of an addition of a timer signal and the input side detected voltage;
an output comparator (X2) configured to output a comparison result signal based on a result of a comparison between the addition result signal and the error voltage; and
a flip-flop circuit (FF) having a set terminal to which a signal from another end of the secondary side winding (L2) is inputted, a reset terminal to which the comparison result signal is inputted, and an output terminal from which a control signal for turning on or off the main switch (SW) is outputted.

7. The power supply device (100, 200) according to claim 6, further comprising a timer circuit (TC) configured to output the timer signal based on the control signal.

8. The power supply device (100, 200) according to claim 7, wherein the timer circuit (TC) includes:
a constant current source having an output that is connected to an input terminal of the adder (Z2), the constant current source being configured to output a constant current;
a timer switch having an input/output terminal that is connected to the input terminal of the adder (Z2), another input/output terminal that is grounded, and a control terminal that is connected to an inverted output terminal of the flip-flop circuit; and
a timer capacitor having one end that is connected to the input/output terminal of the timer switch.

9. The power supply device (100, 200) according to claim 6, wherein the adder (Z2) includes:
a first resistor having one end that is grounded;
a second resistor having one end that is connected to the input side voltage detection circuit (DI);
a third resistor having one end that is connected to an output terminal of the timer circuit;
an amplifier having an inverted input terminal that is connected to another end of the first resistor, a non-inverting input terminal that is connected to another end of the second resistor and another end of the third resistor, and an output terminal that is connected to an inverting input terminal of the output comparator (X2);
a fourth resistor having one end that is connected to the inverting input terminal of the amplifier and another end that is connected to the output terminal of the amplifier; and
a fifth resistor having one end that is connected to the non-inverting input terminal of the amplifier and another end that is grounded.

10. The power supply device (100, 200) according to claim 6,
wherein the input side voltage detection circuit (DI) is an input side voltage dividing circuit connected between the first power supply terminal (TS1) and the second power supply terminal, and configured to output the input side detected voltage, which is a divided voltage of the power supply voltage, from an input side voltage dividing node, the input side voltage dividing circuit including:
a first input side voltage dividing resistor having one end that is connected to the first power supply terminal (TS1) and another end that is connected to the input side voltage dividing node; and
a second input side voltage dividing resistor having one end that is connected to the second power supply terminal and another end that is connected to the input side voltage dividing node, and
wherein the output side voltage detection circuit (DO) is an output side voltage dividing circuit connected between the first load terminal (TL1) and the second load terminal, and configured to output the output side detected voltage, which is a divided voltage of the output voltage between the first load terminal (TL1) and the second load terminal, from an output side voltage dividing node, the output side voltage dividing circuit including:
a first output side voltage dividing resistor having one end that is connected to the first load terminal (TL1) and another end that is connected to the output side voltage dividing node; and
a second output side voltage dividing resistor having one end that is connected to the second load terminal (TL2) and another end that is connected to the output side voltage dividing node.

11. A method of controlling a power supply device (100, 200) including a power factor correction circuit and configured to supply power to a load, the power supply device (100, 200) comprising: an AC power supply configured to output an AC voltage between a first input terminal (TI1) and a second input terminal; a rectifier circuit (RE) connected between the first input terminal (TI1) and the second input terminal (TI2) and configured to output, between a first power supply terminal (TS1) and a second power supply terminal, a power supply voltage obtained by rectifying the AC voltage supplied from the AC power supply; a first load terminal (TL1) connected to a high potential side terminal of the load and a second load terminal (TL2) connected to the second power supply terminal and a low potential side terminal of the load; an input side voltage detection circuit (DI) connected between the first power supply terminal (TS1) and the second power supply terminal, and configured to detect an input side detected voltage based on the power supply voltage; an output side voltage detection circuit (DO) connected between the first load terminal (TL1) and the second load terminal, and configured to detect an output side detected voltage based on an output voltage between the first load terminal (TL1) and the second load terminal; a primary side winding (L1) having one end that is connected to the first power supply terminal, the primary side winding (L1) being included in a transformer (T); a secondary side winding (L2) having one end that is connected to the second power supply terminal, the secondary side winding (L2) being included in the transformer (T); a main switch (SW) having one end that is connected to another end of the primary side winding (L1) and another end that is connected to the second load terminal; an error amplifier (X1) configured to output an error voltage based on a difference between the output side detected voltage and a predefined reference voltage; a subtractor (Z) configured to output a subtraction result signal based on a result of a subtraction of the input side detected voltage from the error voltage; an output comparator (X2) configured to output a comparison result signal based on a result of a comparison between the subtraction result signal and a timer signal; and a flip-flop circuit (FF) having a set terminal to which a signal from another end of the secondary side winding (L2) is inputted, a reset terminal to which the comparison result signal is inputted, and an output terminal from which a control signal for turning on or off the main switch (SW) is outputted, the method comprising:
outputting, by the subtracter, the subtraction result signal based on the result of the subtraction of the input side detected voltage from the error voltage; and
outputting, by the output comparator (X2), the comparison result signal based on the result of the comparison between the subtraction result signal and the timer signal.

12. A method of controlling a power supply device (100, 200) including a power factor correction circuit and configured to supply power to a load, the power supply device (100, 200) comprising:
an AC power supply configured to output an AC voltage between a first input terminal (TI1) and a second input terminal; a rectifier circuit (RE) connected between the first input terminal (TI1) and the second input terminal, and configured to output, between a first power supply terminal (TS1) and a second power supply terminal, a power supply voltage obtained by rectifying the AC voltage supplied from the AC power supply; a first load terminal (TL1) connected to a high potential side terminal of the load and a second load terminal (TL2) connected to the second power supply terminal and a low potential side terminal of the load; an input side voltage detection circuit (DI) connected between the first power supply terminal (TS1) and the second power supply terminal, and configured to detect an input side detected voltage based on the power supply voltage; an output side voltage detection circuit (DO) connected between the first load terminal (TL1) and the second load terminal, and configured to detect an output side detected voltage based on an output voltage between the first load terminal (TL1) and the second load terminal; a primary side winding (L1) having one end that is connected to the first power supply terminal, the primary side winding (L1) being included in a transformer (T); a secondary side winding (L2) having one end that is connected to the second power supply terminal, the secondary side winding (L2) being included in the transformer (T); a main switch (SW) having one end that is connected to another end of the primary side winding (L1) and another end that is connected to the second load terminal; an error amplifier (X1) configured to output an error voltage based on a difference between the output side detected voltage and a predefined reference voltage; an adder (Z2) configured to output an addition result signal based on a result of an addition of a timer signal and the input side detected voltage;
an output comparator (X2) configured to output a comparison result signal based on a result of a comparison between the addition result signal and the error voltage; and a flip-flop circuit (FF) having a set terminal to which a signal from another end of the secondary side winding (L2) is inputted, a reset terminal to which the comparison result signal is inputted, and an output terminal from which a control signal for turning on or off the main switch (SW) is outputted, the method comprising:
outputting, by the adder (Z2), the addition result signal based on the result of the addition of the timer signal and the input side detected voltage; and
outputting, by the output comparator (X2), the comparison result signal based on the result of the comparison between the addition result signal and the error voltage.

## Patentansprüche

1. Stromversorgungsvorrichtung (100, 200), die eine Leistungsfaktorkorrekturschaltung aufweist und so konfiguriert ist, dass sie einen Verbraucher mit Strom versorgt, wobei sie Folgendes umfasst:
eine Wechselstromversorgung (ACS), die so konfiguriert ist, dass sie zwischen einer ersten Eingangsklemme (TI1) und einer zweiten Eingangsklemme (TI2) eine Wechselspannung ausgibt,
eine Gleichrichterschaltung (RE), die zwischen die erste Eingangsklemme (TI1) und die zweite Eingangsklemme (TI2) geschaltet und so konfiguriert ist, dass sie zwischen einer ersten Stromversorgungsklemme (TS1) und einer zweiten Stromversorgungsklemme (TS2) eine Versorgungsspannung ausgibt, die durch Gleichrichten der von der Wechselstromversorgung (ACS) gelieferten Wechselspannung gewonnen wird,
eine erste Verbraucherklemme (TL1), die mit einer Klemme auf der Hochspannungsseite des Verbrauchers verbunden ist, und eine zweite Verbraucherklemme (TL2), die mit der zweiten Stromversorgungsklemme (TS2) und einer Klemme auf der Niederspannungsseite des Verbrauchers verbunden ist,
eine Erfassungsschaltung (DI) für eine eingangsseitige Spannung, die zwischen die erste Stromversorgungsklemme (TS1) und die zweite Stromversorgungsklemme (TS2) geschaltet und so konfiguriert ist, dass sie eine eingangsseitig erfasste Spannung erfasst, die auf der Versorgungsspannung basiert,
eine Erfassungsschaltung (DO) für eine ausgangsseitige Spannung, die zwischen die erste Verbraucherklemme (TL1) und die zweite Verbraucherklemme (TL2) geschaltet und so konfiguriert ist, dass sie eine ausgangsseitig erfasste Spannung erfasst, die auf einer Ausgangsspannung zwischen der ersten Verbraucherklemme (TL1) und der zweiten Verbraucherklemme (TL2) basiert,
eine Primärseitenwicklung (L1), bei der ein Ende mit der ersten Stromversorgungsklemme (TS1) verbunden ist, wobei die Primärseitenwicklung (L1) zu einem Transformator (T) gehört,
eine Sekundärseitenwicklung (L2), bei der ein Ende mit der zweiten Stromversorgungsklemme (TS2) verbunden ist, wobei die Sekundärseitenwicklung (L2) zu dem Transformator (T) gehört,
einen Hauptschalter (SW), bei dem ein Ende mit einem anderen Ende der Primärseitenwicklung (L1) und ein anderes Ende mit der zweiten Verbraucherklemme (TL2) verbunden ist,
**dadurch gekennzeichnet, dass**
einen Fehlerverstärker (X1), der so konfiguriert ist, dass er eine Fehlerspannung ausgibt, die auf einer Differenz zwischen der ausgangsseitig erfassten Spannung und einer vorgegebenen Referenzspannung basiert, einen Subtrahierer (Z), der so konfiguriert ist, dass er ein Subtraktionsergebnissignal ausgibt, das auf einem Ergebnis einer Subtraktion der eingangsseitig erfassten Spannung von der Fehlerspannung basiert,
einen Ausgangskomparator (X2), der so konfiguriert ist, dass er ein Vergleichsergebnissignal ausgibt, das auf einem Ergebnis eines Vergleichs zwischen dem Subtraktionsergebnissignal und einem Zeitgebersignal basiert, und
eine Flipflop-Schaltung (FF) mit einer Set-Klemme, in die ein Signal aus einem anderen Ende der Sekundärseitenwicklung (L2) eingegeben wird, einer Reset-Klemme, in die das Vergleichsergebnissignal eingegeben wird, und einer Ausgangsklemme, aus der ein Steuersignal zum Ein- oder Ausschalten des Hauptschalters (SW) ausgegeben wird.

2. Stromversorgungsvorrichtung (100, 200) nach Anspruch 1, die ferner eine Zeitgeberschaltung (TC) umfasst, die so konfiguriert ist, dass sie auf der Grundlage des Steuersignals das Zeitgebersignal ausgibt.

3. Stromversorgungsvorrichtung (100, 200) nach Anspruch 2, wobei die Zeitgeberschaltung (TC) Folgendes aufweist:
eine Konstantstromquelle mit einer Ausgangsklemme, die mit einer nichtinvertierenden Eingangsklemme des Ausgangskomparators (X2) verbunden ist, wobei die Konstantstromquelle so konfiguriert ist, dass sie einen Konstantstrom ausgibt,
eine Zeitschaltuhr mit einer mit der nichtinvertierenden Eingangsklemme des Ausgangskomparators (X2) verbundenen Ein-/Ausgangsklemme, einer weiteren Ein-/Ausgangsklemme, die geerdet ist, und einer Steuerklemme, die mit einer invertierten Ausgangsklemme der Flipflop-Schaltung verbunden ist, und
einen Zeitgeberkondensator, bei dem ein Ende mit der Ein-/Ausgangsklemme der Zeitschaltuhr verbunden ist.

4. Stromversorgungsvorrichtung (100, 200) nach Anspruch 1, wobei der Subtrahierer (Z) Folgendes aufweist:
einen ersten Widerstand, bei dem ein Ende mit der Erfassungsschaltung (DI) für die eingangsseitige Spannung verbunden ist,
einen zweiten Widerstand, bei dem ein Ende mit einer Ausgangsklemme des Fehlerverstärkers (X1) verbunden ist,
einen Verstärker mit einer invertierenden Eingangsklemme, die mit einem anderen Ende des ersten Widerstands verbunden ist, einer nichtinvertierenden Eingangsklemme, die mit einem anderen Ende des zweiten Widerstands verbunden ist, und einer Ausgangsklemme, die mit einer invertierenden Eingangsklemme des Ausgangskomparators (X2) verbunden ist,
einen dritten Widerstand, bei dem ein Ende mit der invertierenden Eingangsklemme des Verstärkers und ein anderes Ende mit der Ausgangsklemme des Verstärkers verbunden ist, und
einen vierten Widerstand, bei dem ein Ende mit der nichtinvertierenden Eingangsklemme des Verstärkers verbunden und ein anderes Ende geerdet ist.

5. Stromversorgungsvorrichtung (100, 200) nach Anspruch 1,
wobei es sich bei der Erfassungsschaltung (DI) für die eingangsseitige Spannung um eine zwischen die erste Stromversorgungsklemme (TS1) und die zweite Stromversorgungsklemme geschaltete eingangsseitige Spannungsteilungsschaltung handelt, die so konfiguriert ist, dass sie die eingangsseitig erfasste Spannung, bei er es sich um eine geteilte Spannung der Versorgungsspannung handelt, aus einem eingangsseitigen Spannungsteilungsknoten ausgibt, wobei die eingangsseitige Spannungsteilungsschaltung Folgendes aufweist:
einen ersten eingangsseitigen Spannungsteilungswiderstand, bei dem ein Ende mit der ersten Stromversorgungsklemme (TS1) und ein anderes Ende mit dem eingangsseitigen Spannungsteilungsknoten verbunden ist, und
einen zweiten eingangsseitigen Spannungsteilungswiderstand, bei dem ein Ende mit der zweiten Stromversorgungsklemme und ein anderes Ende mit dem eingangsseitigen Spannungsteilungsknoten verbunden ist, und
wobei es sich bei der Erfassungsschaltung (DO) für die ausgangsseitige Spannung um eine zwischen die erste und die zweite Verbraucherklemme geschaltete ausgangsseitige Spannungsteilungsschaltung handelt, die so konfiguriert ist, dass sie die ausgangsseitig erfasste Spannung, bei er es sich um eine geteilte Spannung der Ausgangsspannung zwischen der ersten Verbraucherklemme (TL1) und der zweiten Verbraucherklemme handelt, aus einem ausgangsseitigen Spannungsteilungsknoten ausgibt, wobei die ausgangsseitige Spannungsteilungsschaltung Folgendes aufweist:
einen ersten ausgangsseitigen Spannungsteilungswiderstand, bei dem ein Ende mit der ersten Verbraucherklemme (TL1) und ein anderes Ende mit dem ausgangsseitigen Spannungsteilungsknoten verbunden ist, und
einen zweiten ausgangsseitigen Spannungsteilungswiderstand, bei dem ein Ende mit der zweiten Verbraucherklemme (TL2) und ein anderes Ende mit dem ausgangsseitigen Spannungsteilungsknoten verbunden ist.

6. Stromversorgungsvorrichtung (100, 200), die eine Leistungsfaktorkorrekturschaltung aufweist und so konfiguriert ist, dass sie einen Verbraucher mit Strom versorgt, wobei sie Folgendes umfasst:
eine Wechselstromversorgung, die so konfiguriert ist, dass sie zwischen einer ersten Eingangsklemme (TI1) und einer zweiten Eingangsklemme eine Wechselspannung ausgibt,
eine Gleichrichterschaltung (RE), die zwischen die erste Eingangsklemme (TI1) und die zweite Eingangsklemme (TI2) geschaltet und so konfiguriert ist, dass sie zwischen einer ersten Stromversorgungsklemme (TS1) und einer zweiten Stromversorgungsklemme eine Versorgungsspannung ausgibt, die durch Gleichrichten der von der Wechselstromversorgung gelieferten Wechselspannung gewonnen wird,
eine erste Verbraucherklemme (TL1), die mit einer Klemme auf der Hochspannungsseite des Verbrauchers verbunden ist, und eine zweite Verbraucherklemme (TL2), die mit der zweiten Stromversorgungsklemme und einer Klemme auf der Niederspannungsseite des Verbrauchers verbunden ist,
eine Erfassungsschaltung (DI) für eine eingangsseitige Spannung, die zwischen die erste Stromversorgungsklemme (TS1) und die zweite Stromversorgungsklemme geschaltet und so konfiguriert ist, dass sie eine eingangsseitig erfasste Spannung erfasst, die auf der Versorgungsspannung basiert,
eine Erfassungsschaltung (DO) für eine ausgangsseitige Spannung, die zwischen die erste Verbraucherklemme (TL1) und die zweite Verbraucherklemme geschaltet und so konfiguriert ist, dass sie eine ausgangsseitig erfasste Spannung erfasst, die auf einer Ausgangsspannung zwischen der ersten Verbraucherklemme (TL1) und der zweiten Verbraucherklemme basiert,
eine Primärseitenwicklung (L1), bei der ein Ende mit der ersten Stromversorgungsklemme verbunden ist, wobei die Primärseitenwicklung (L1) zu einem Transformator (T) gehört,
eine Sekundärseitenwicklung (L2), bei der ein Ende mit der zweiten Stromversorgungsklemme verbunden ist, wobei die Sekundärseitenwicklung (L2) zu dem Transformator (T) gehört,
einen Hauptschalter (SW), bei dem ein Ende mit einem anderen Ende der Primärseitenwicklung (L1) und ein anderes Ende mit der zweiten Verbraucherklemme verbunden ist,
**dadurch gekennzeichnet, dass**
einen Fehlerverstärker (X1), der so konfiguriert ist, dass er eine Fehlerspannung ausgibt, die auf einer Differenz zwischen der ausgangsseitig erfassten Spannung und einer vorgegebenen Referenzspannung basiert,
einen Addierer (Z2), der so konfiguriert ist, dass er ein Additionsergebnissignal ausgibt, das auf einem Ergebnis einer Addition eines Zeitgebersignals und der eingangsseitig erfassten Spannung basiert,
einen Ausgangskomparator (X2), der so konfiguriert ist, dass er ein Vergleichsergebnissignal ausgibt, das auf einem Ergebnis eines Vergleichs zwischen dem Additionsergebnissignal und der Fehlerspannung basiert, und
eine Flipflop-Schaltung (FF) mit einer Set-Klemme, in die ein Signal aus einem anderen Ende der Sekundärseitenwicklung (L2) eingegeben wird, einer Reset-Klemme, in die das Vergleichsergebnissignal eingegeben wird, und einer Ausgangsklemme, aus der ein Steuersignal zum Ein- oder Ausschalten des Hauptschalters (SW) ausgegeben wird.

7. Stromversorgungsvorrichtung (100, 200) nach Anspruch 6, die ferner eine Zeitgeberschaltung (TC) umfasst, die so konfiguriert ist, dass sie auf der Grundlage des Steuersignals das Zeitgebersignal ausgibt.

8. Stromversorgungsvorrichtung (100, 200) nach Anspruch 7, wobei die Zeitgeberschaltung (TC) Folgendes aufweist:
eine Konstantstromquelle mit einem Ausgang, der mit einer Eingangsklemme des Addierers (Z2) verbunden ist, wobei die Konstantstromquelle so konfiguriert ist, dass sie einen Konstantstrom ausgibt,
eine Zeitschaltuhr mit einer mit der Eingangsklemme des Addierers (Z2) verbundenen Ein-/Ausgangsklemme, einer weiteren Ein-/Ausgangsklemme, die geerdet ist, und einer Steuerklemme, die mit einer invertierten Ausgangsklemme der Flipflop-Schaltung verbunden ist, und
einen Zeitgeberkondensator, bei dem ein Ende mit der Ein-/Ausgangsklemme der Zeitschaltuhr verbunden ist.

9. Stromversorgungsvorrichtung (100, 200) nach Anspruch 6, wobei der Addierer (Z2) Folgendes aufweist:
einen ersten Widerstand, bei dem ein Ende geerdet ist,
einen zweiten Widerstand, bei dem ein Ende mit der Erfassungsschaltung (DI) für die eingangsseitige Spannung verbunden ist,
einen dritten Widerstand, bei dem ein Ende mit einer Ausgangsklemme der Zeitgeberschaltung verbunden ist,
einen Verstärker mit einer invertierten Eingangsklemme, die mit einem anderen Ende des ersten Widerstands verbunden ist, einer nichtinvertierenden Eingangsklemme, die mit einem anderen Ende des zweiten Widerstands und einem anderen Ende des dritten Widerstands verbunden ist, und einer Ausgangsklemme, die mit einer invertierenden Eingangsklemme des Ausgangskomparators (X2) verbunden ist,
einen vierten Widerstand, bei dem ein Ende mit der invertierenden Eingangsklemme des Verstärkers und ein anderes Ende mit der Ausgangsklemme des Verstärkers verbunden ist, und
einen fünften Widerstand, bei dem ein Ende mit der nichtinvertierenden Eingangsklemme des Verstärkers verbunden und ein anderes Ende geerdet ist.

10. Stromversorgungsvorrichtung (100, 200) nach Anspruch 6,
wobei es sich bei der Erfassungsschaltung (DI) für die eingangsseitige Spannung um eine eingangsseitige Spannungsteilungsschaltung handelt, die zwischen die erste Stromversorgungsklemme (TS1) und die zweite Stromversorgungsklemme geschaltet und so konfiguriert ist, dass sie die eingangsseitig erfasste Spannung, bei er es sich um eine geteilte Spannung der Versorgungsspannung handelt, aus einem eingangsseitigen Spannungsteilungsknoten ausgibt, wobei die eingangsseitige Spannungsteilungsschaltung Folgendes aufweist:
einen ersten eingangsseitigen Spannungsteilungswiderstand, bei dem ein Ende mit der ersten Stromversorgungsklemme (TS1) und ein anderes Ende mit dem eingangsseitigen Spannungsteilungsknoten verbunden ist, und
einen zweiten eingangsseitigen Spannungsteilungswiderstand, bei dem ein Ende mit der zweiten Stromversorgungsklemme und ein anderes Ende mit dem eingangsseitigen Spannungsteilungsknoten verbunden ist, und
wobei es sich bei der Erfassungsschaltung (DO) für die ausgangsseitige Spannung um eine ausgangsseitige Spannungsteilungsschaltung handelt, die zwischen die erste Verbraucherklemme (TL1) und die zweite Verbraucherklemme geschaltet und so konfiguriert ist, dass sie die ausgangsseitig erfasste Spannung, bei er es sich um eine geteilte Spannung der Ausgangsspannung zwischen der ersten Verbraucherklemme (TL1) und der zweiten Verbraucherklemme handelt, aus einem ausgangsseitigen Spannungsteilungsknoten ausgibt, wobei die ausgangsseitige Spannungsteilungsschaltung Folgendes aufweist:
einen ersten ausgangsseitigen Spannungsteilungswiderstand, bei dem ein Ende mit der ersten Verbraucherklemme (TL1) und ein anderes Ende mit dem ausgangsseitigen Spannungsteilungsknoten verbunden ist, und
einen zweiten ausgangsseitigen Spannungsteilungswiderstand, bei dem ein Ende mit der zweiten Verbraucherklemme (TL2) und ein anderes Ende mit dem ausgangsseitigen Spannungsteilungsknoten verbunden ist.

11. Verfahren zum Steuern einer Stromversorgungsvorrichtung (100, 200), die eine Leistungsfaktorkorrekturschaltung aufweist und so konfiguriert ist, dass sie einen Verbraucher mit Strom versorgt, wobei die Stromversorgungsvorrichtung (100, 200) Folgendes umfasst: eine Wechselstromversorgung, die so konfiguriert ist, dass sie zwischen einer ersten Eingangsklemme (TI1) und einer zweiten Eingangsklemme eine Wechselspannung ausgibt, eine Gleichrichterschaltung (RE), die zwischen die erste Eingangsklemme (TI1) und die zweite Eingangsklemme (TI2) geschaltet und so konfiguriert ist, dass sie zwischen einer ersten Stromversorgungsklemme (TS1) und einer zweiten Stromversorgungsklemme eine Versorgungsspannung ausgibt, die durch Gleichrichten der von der Wechselstromversorgung gelieferten Wechselspannung gewonnen wird, eine erste Verbraucherklemme (TL1), die mit einer Klemme auf der Hochspannungsseite des Verbrauchers verbunden ist, und eine zweite Verbraucherklemme (TL2), die mit der zweiten Stromversorgungsklemme und einer Klemme auf der Niederspannungsseite des Verbrauchers verbunden ist, eine Erfassungsschaltung (DI) für eine eingangsseitige Spannung, die zwischen die erste Stromversorgungsklemme (TS1) und die zweite Stromversorgungsklemme geschaltet und so konfiguriert ist, dass sie eine eingangsseitig erfasste Spannung erfasst, die auf der Versorgungsspannung basiert, eine Erfassungsschaltung (DO) für eine ausgangsseitige Spannung, die zwischen die erste Verbraucherklemme (TL1) und die zweite Verbraucherklemme geschaltet und so konfiguriert ist, dass sie eine ausgangsseitig erfasste Spannung erfasst, die auf einer Ausgangsspannung zwischen der ersten Verbraucherklemme (TL1) und der zweiten Verbraucherklemme basiert, eine Primärseitenwicklung (L1), bei der ein Ende mit der ersten Stromversorgungsklemme verbunden ist, wobei die Primärseitenwicklung (L1) zu einem Transformator (T) gehört, eine Sekundärseitenwicklung (L2), bei der ein Ende mit der zweiten Stromversorgungsklemme verbunden ist, wobei die Sekundärseitenwicklung (L2) zu dem Transformator (T) gehört, einen Hauptschalter (SW), bei dem ein Ende mit einem anderen Ende der Primärseitenwicklung (L1) und ein anderes Ende mit der zweiten Verbraucherklemme verbunden ist, einen Fehlerverstärker (X1), der so konfiguriert ist, dass er eine Fehlerspannung ausgibt, die auf einer Differenz zwischen der ausgangsseitig erfassten Spannung und einer vorgegebenen Referenzspannung basiert, einen Subtrahierer (Z), der so konfiguriert ist, dass er ein Subtraktionsergebnissignal ausgibt, das auf einer Subtraktion der eingangsseitig erfassten Spannung von der Fehlerspannung basiert, einen Ausgangskomparator (X2), der so konfiguriert ist, dass er ein Vergleichsergebnissignal ausgibt, das auf einem Ergebnis eines Vergleichs zwischen dem Subtraktionsergebnissignal und einem Zeitgebersignal basiert, und eine Flipflop-Schaltung (FF) mit einer Set-Klemme, in die ein Signal aus einem anderen Ende der Sekundärseitenwicklung (L2) eingegeben wird, einer Reset-Klemme, in die das Vergleichsergebnissignal eingegeben wird, und einer Ausgangsklemme, aus der ein Steuersignal zum Ein- oder Ausschalten des Hauptschalters (SW) ausgegeben wird, wobei das Verfahren Folgendes umfasst:
Ausgeben des Subtraktionsergebnissignals, das auf dem Ergebnis der Subtraktion der eingangsseitig erfassten Spannung von der Fehlerspannung basiert, durch den Subtrahierer und
Ausgeben des Vergleichsergebnissignals, das auf dem Ergebnis des Vergleichs zwischen dem Subtraktionsergebnissignal und dem Zeitgebersignal basiert, durch den Ausgangskomparator (X2).

12. Verfahren zum Steuern einer Stromversorgungsvorrichtung (100, 200), die eine Leistungsfaktorkorrekturschaltung aufweist und so konfiguriert ist, dass sie einen Verbraucher mit Strom versorgt, wobei die Stromversorgungsvorrichtung (100, 200) Folgendes umfasst:
eine Wechselstromversorgung, die so konfiguriert ist, dass sie zwischen einer ersten Eingangsklemme (TI1) und einer zweiten Eingangsklemme eine Wechselspannung ausgibt, eine Gleichrichterschaltung (RE), die zwischen die erste Eingangsklemme (TI1) und die zweite Eingangsklemme geschaltet und so konfiguriert ist, dass sie zwischen einer ersten Stromversorgungsklemme (TS1) und einer zweiten Stromversorgungsklemme eine Versorgungsspannung ausgibt, die durch Gleichrichten der von der Wechselstromversorgung gelieferten Wechselspannung gewonnen wird, eine erste Verbraucherklemme (TL1), die mit einer Klemme auf der Hochspannungsseite des Verbrauchers verbunden ist, und eine zweite Verbraucherklemme (TL2), die mit der zweiten Stromversorgungsklemme und einer Klemme auf der Niederspannungsseite des Verbrauchers verbunden ist, eine Erfassungsschaltung (DI) für eine eingangsseitige Spannung, die zwischen die erste Stromversorgungsklemme (TS1) und die zweite Stromversorgungsklemme geschaltet und so konfiguriert ist, dass sie eine eingangsseitig erfasste Spannung erfasst, die auf der Versorgungsspannung basiert, eine Erfassungsschaltung (DO) für eine ausgangsseitige Spannung, die zwischen die erste Verbraucherklemme (TL1) und die zweite Verbraucherklemme geschaltet und so konfiguriert ist, dass sie eine ausgangsseitig erfasste Spannung erfasst, die auf einer Ausgangsspannung zwischen der ersten Verbraucherklemme (TL1) und der zweiten Verbraucherklemme basiert, eine Primärseitenwicklung (L1), bei der ein Ende mit der ersten Stromversorgungsklemme verbunden ist, wobei die Primärseitenwicklung (L1) zu einem Transformator (T) gehört, eine Sekundärseitenwicklung (L2), bei der ein Ende mit der zweiten Stromversorgungsklemme verbunden ist, wobei die Sekundärseitenwicklung (L2) zu dem Transformator (T) gehört, einen Hauptschalter (SW), bei dem ein Ende mit einem anderen Ende der Primärseitenwicklung (L1) und ein anderes Ende mit der zweiten Verbraucherklemme verbunden ist, einen Fehlerverstärker (X1), der so konfiguriert ist, dass er eine Fehlerspannung ausgibt, die auf einer Differenz zwischen der ausgangsseitig erfassten Spannung und einer vorgegebenen Referenzspannung basiert, einen Addierer (Z2), der so konfiguriert ist, dass er ein Additionsergebnissignal ausgibt, das auf einem Ergebnis einer Addition eines Zeitgebersignals und der eingangsseitig erfassten Spannung basiert, einen Ausgangskomparator (X2), der so konfiguriert ist, dass er ein Vergleichsergebnissignal ausgibt, das auf einem Ergebnis eines Vergleichs zwischen dem Additionsergebnissignal und der Fehlerspannung basiert, und eine Flipflop-Schaltung (FF) mit einer Set-Klemme, in die ein Signal aus einem anderen Ende der Sekundärseitenwicklung (L2) eingegeben wird, einer Reset-Klemme, in die das Vergleichsergebnissignal eingegeben wird, und einer Ausgangsklemme, aus der ein Steuersignal zum Ein- oder Ausschalten des Hauptschalters (SW) ausgegeben wird, wobei das Verfahren Folgendes umfasst:
Ausgeben des Additionsergebnissignals, das auf dem Ergebnis der Addition des Zeitgebersignals und der eingangsseitig erfassten Spannung basiert, durch den Addierer (Z2) und
Ausgeben des Vergleichsergebnissignals, das auf dem Ergebnis des Vergleichs zwischen dem Additionsergebnissignal und der Fehlerspannung basiert, durch den Ausgangskomparator (X2).

## Revendications

1. Dispositif d'alimentation électrique (100, 200) comprenant un circuit de correction du facteur de puissance et configuré pour alimenter une charge, le dispositif d'alimentation électrique comprenant :
une alimentation CA (ACS) configurée pour sortir une tension CA entre une première borne d'entrée (TI1) et une deuxième borne d'entrée (TI2) ;
un circuit redresseur (RE) connecté entre la première borne d'entrée (TI1) et la deuxième borne d'entrée (TI2) et configuré pour sortir, entre une première borne d'alimentation (TS1) et une deuxième borne d'alimentation (TS2), une tension d'alimentation obtenue en redressant la tension CA fournie par l'alimentation CA (ACS) ;
une première borne de charge (TL1) connectée à une borne côté haut potentiel de la charge et une deuxième borne de charge (TL2) connectée à la deuxième borne d'alimentation (TS2) et à une borne côté bas potentiel de la charge ;
un circuit de détection de tension côté entrée (DI) connecté entre la première borne d'alimentation (TS1) et la deuxième borne d'alimentation (TS2), et configuré pour détecter une tension détectée côté entrée sur base de la tension d'alimentation ;
un circuit de détection de tension côté sortie (DO) connecté entre la première borne de charge (TL1) et la deuxième borne de charge (TL2), et configuré pour détecter une tension détectée côté sortie sur base d'une tension de sortie entre la première borne de charge (TL1) et la deuxième borne de charge (TL2) ;
un enroulement côté primaire (L1) dont une extrémité est connectée à la première borne d'alimentation (TS1), l'enroulement côté primaire (L1) étant inclus dans un transformateur (T) ;
un enroulement côté secondaire (L2) dont une extrémité est connectée à la deuxième borne d'alimentation (TS2), l'enroulement côté secondaire (L2) étant inclus dans le transformateur (T) ;
un commutateur principal (SW) dont une extrémité est connectée à une autre extrémité de l'enroulement côté primaire (L1) et une autre extrémité est connectée à la deuxième borne de charge (TL2) ;
**caractérisé par**
un amplificateur d'erreur (X1) configuré pour sortir une tension d'erreur sur base d'une différence entre la tension détectée côté sortie et une tension de référence prédéfinie ;
un soustracteur (Z) configuré pour sortir un signal de résultat de soustraction sur base du résultat d'une soustraction de la tension d'erreur moins la tension détectée côté entrée ;
un comparateur de sortie (X2) configuré pour sortir un signal de résultat de comparaison sur base du résultat d'une comparaison entre le signal de résultat de soustraction et un signal de minuterie ; et
un circuit de bascule (FF) comportant une borne d'initialisation où est entré un signal provenant d'une autre extrémité de l'enroulement côté secondaire (L2), une borne de réinitialisation où est entré le signal du résultat de comparaison, et une borne de sortie où est sorti un signal de contrôle pour ouvrir ou fermer le commutateur principal (SW).

2. Dispositif d'alimentation électrique (100, 200) selon la revendication 1, comprenant en outre un circuit de minuterie (TC) configuré pour sortir le signal de minuterie sur base du signal de contrôle.

3. Dispositif d'alimentation électrique (100, 200) selon la revendication 2, dans lequel le circuit de minuterie (TC) comprend :
une source de courant constant comportant une borne de sortie connectée à une borne d'entrée non inverseuse du comparateur de sortie (X2), la source de courant constant étant configurée pour sortir un courant constant ;
un commutateur de minuterie comportant une borne d'entrée/sortie connectée à la borne d'entrée non inverseuse du comparateur de sortie (X2), une autre borne d'entrée/sortie mise à la terre, et une borne de contrôle connectée à une borne de sortie inversée du circuit de bascule ; et
un condensateur de minuterie dont une extrémité est connectée à la borne d'entrée/sortie du commutateur de minuterie.

4. Dispositif d'alimentation électrique (100, 200) selon la revendication 1, dans lequel le soustracteur (Z) comprend :
une première résistance dont une extrémité est connectée au circuit de détection de tension côté entrée (DI) ;
une deuxième résistance dont une extrémité est connectée à une borne de sortie de l'amplificateur d'erreur (X1) ;
un amplificateur comportant une borne d'entrée inverseuse connectée à une autre extrémité de la première résistance, une borne d'entrée non inverseuse connectée à une autre extrémité de la deuxième résistance, et une borne de sortie connectée à une borne d'entrée inverseuse du comparateur de sortie (X2) ;
une troisième résistance dont une extrémité est connectée à la borne d'entrée inverseuse de l'amplificateur et une autre extrémité est connectée à la borne de sortie de l'amplificateur ; et
une quatrième résistance dont une extrémité est connectée à la borne d'entrée non inverseuse de l'amplificateur et une autre extrémité est mise à la terre.

5. Dispositif d'alimentation électrique (100, 200) selon la revendication 1,
dans lequel le circuit de détection de tension côté entrée (DI) est un circuit de division de tension côté entrée connecté entre la première borne d'alimentation (TS1) et la deuxième borne d'alimentation, et configuré pour sortir la tension détectée côté entrée, qui est une tension divisée de la tension d'alimentation, à partir d'un nœud de division de tension côté entrée, le circuit de division de tension côté entrée comprenant :
une première résistance de division de tension côté entrée dont une extrémité est connectée à la première borne d'alimentation (TS1) et une autre extrémité est connectée au nœud de division de tension côté entrée ; et
une deuxième résistance de division de tension côté entrée dont une extrémité est connectée à la deuxième borne d'alimentation et une autre extrémité est connectée au nœud de division de tension côté entrée, et
dans lequel le circuit de détection de tension côté sortie (DO) est un circuit de division de tension côté sortie connecté entre la première borne de charge et la deuxième borne de charge, et configuré pour sortir la tension détectée côté sortie, qui est une tension divisée de la tension de sortie entre la première borne de charge (TL1) et la deuxième borne de charge, à partir d'un nœud de division de tension côté sortie, le circuit de division de tension côté sortie comprenant :
une première résistance de division de tension côté sortie dont une extrémité est connectée à la première borne de charge (TL1) et une autre extrémité est connectée au nœud de division de tension côté sortie ; et
une deuxième résistance de division de tension côté sortie dont une extrémité est connectée à la deuxième borne de charge (TL2) et une autre extrémité est connectée au nœud de division de tension côté sortie.

6. Dispositif d'alimentation électrique (100, 200) comprenant un circuit de correction de facteur de puissance et configuré pour alimenter une charge, le dispositif d'alimentation électrique (100, 200) comprenant :
une alimentation CA configurée pour sortir une tension CA entre une première borne d'entrée (TI1) et une deuxième borne d'entrée ;
un circuit redresseur (RE) connecté entre la première borne d'entrée (TI1) et la deuxième borne d'entrée (TI2) et configuré pour sortir, entre une première borne d'alimentation (TS1) et une deuxième borne d'alimentation, une tension d'alimentation obtenue par redressement de la tension CA alimentée par l'alimentation CA ;
une première borne de charge (TL1) connectée à une borne côté haut potentiel de la charge, et une deuxième borne de charge (TL2) connectée à la deuxième borne d'alimentation et à une borne côté bas potentiel de la charge ;
un circuit de détection de tension côté entrée (DI) connecté entre la première borne d'alimentation (TS1) et la deuxième borne d'alimentation, et configuré pour détecter une tension détectée côté entrée sur base de la tension d'alimentation ;
un circuit de détection de tension côté sortie (DO) connecté entre la première borne de charge (TL1) et la deuxième borne de charge, et configuré pour détecter une tension détectée côté sortie sur base d'une tension de sortie entre la première borne de charge (TL1) et la deuxième borne de charge ;
un enroulement côté primaire (L1) dont une extrémité est connectée à la première borne d'alimentation, l'enroulement côté primaire (L1) étant inclus dans un transformateur (T) ;
un enroulement côté secondaire (L2) dont une extrémité est connectée à la deuxième borne d'alimentation, l'enroulement côté secondaire (L2) étant inclus dans le transformateur (T) ;
un commutateur principal (SW) dont une extrémité est connectée à une autre extrémité de l'enroulement côté primaire (L1) et une autre extrémité est connectée à la deuxième borne de charge ;
**caractérisé par**
un amplificateur d'erreur (X1) configuré pour sortir une tension d'erreur sur base d'une différence entre la tension détectée côté sortie et une tension de référence prédéfinie ;
un additionneur (Z2) configuré pour sortir un signal de résultat d'addition sur base d'un résultat d'addition d'un signal de minuterie et de la tension détectée côté entrée ;
un comparateur de sortie (X2) configuré pour sortir un signal de résultat de comparaison sur base du résultat d'une comparaison entre le signal de résultat d'addition et la tension d'erreur ; et
un circuit de bascule (FF) comportant une borne d'initialisation où est entré un signal provenant d'une autre extrémité de l'enroulement côté secondaire (L2), une borne de réinitialisation où est entré le signal du résultat de comparaison, et une borne de sortie où est sorti un signal de contrôle pour ouvrir ou fermer le commutateur principal (SW).

7. Dispositif d'alimentation électrique (100, 200) selon la revendication 6, comprenant en outre un circuit de minuterie (TC) configuré pour sortir le signal de minuterie sur base du signal de contrôle.

8. Dispositif d'alimentation électrique (100, 200) selon la revendication 7, dans lequel le circuit de minuterie (TC) comprend :
une source de courant constant comportant une sortie qui est connectée à une borne d'entrée de l'additionneur (Z2), la source de courant constant étant configurée pour sortir un courant constant ;
un commutateur de minuterie comportant une borne d'entrée/sortie connectée à la borne d'entrée de l'additionneur (Z2), une autre borne d'entrée/sortie mise à la terre, et une borne de contrôle connectée à une borne de sortie inversée du circuit de bascule ; et
un condensateur de minuterie dont une extrémité est connectée à la borne d'entrée/sortie du commutateur de minuterie.

9. Dispositif d'alimentation électrique (100, 200) selon la revendication 6, dans lequel l'additionneur (Z2) comprend :
une première résistance dont une extrémité est mise à la terre ;
une deuxième résistance dont une extrémité est connectée au circuit de détection de tension côté entrée (DI) ;
une troisième résistance dont une extrémité est connectée à une borne de sortie du circuit de minuterie ;
un amplificateur comportant une borne d'entrée inversée connectée à une autre extrémité de la première résistance, une borne d'entrée non inverseuse connectée à une autre extrémité de la deuxième résistance et à une autre extrémité de la troisième résistance, et une borne de sortie connectée à une borne d'entrée inverseuse du comparateur de sortie (X2) ;
une quatrième résistance dont une extrémité est connectée à la borne d'entrée inverseuse de l'amplificateur et une autre extrémité est connectée à la borne de sortie de l'amplificateur ; et
une cinquième résistance dont une extrémité est connectée à la borne d'entrée non inverseuse de l'amplificateur et une autre extrémité est mise à la terre.

10. Dispositif d'alimentation électrique (100, 200) selon la revendication 6,
dans lequel le circuit de détection de tension côté entrée (DI) est un circuit de division de tension côté entrée connecté entre la première borne d'alimentation (TS1) et la deuxième borne d'alimentation, et configuré pour sortir la tension détectée côté entrée, qui est une tension divisée de la tension d'alimentation, à partir d'un nœud de division de tension côté entrée, le circuit de division de tension côté entrée comprenant :
une première résistance de division de tension côté entrée dont une extrémité est connectée à la première borne d'alimentation (TS1) et une autre extrémité est connectée au nœud de division de tension côté entrée ; et
une deuxième résistance de division de tension côté entrée dont une extrémité est connectée à la deuxième borne d'alimentation et une autre extrémité est connectée au nœud de division de tension côté entrée, et
dans lequel le circuit de détection de tension côté sortie (DO) est un circuit de division de tension côté sortie connecté entre la première borne de charge (TL1) et la deuxième borne de charge, et configuré pour sortir la tension détectée côté sortie, qui est une tension divisée de la tension de sortie entre la première borne de charge (TL1) et la deuxième borne de charge, depuis un nœud de division de tension côté sortie, le circuit de division de tension côté sortie comprenant :
une première résistance de division de tension côté sortie dont une extrémité est connectée à la première borne de charge (TL1) et une autre extrémité est connectée au nœud de division de tension côté sortie ; et
une deuxième résistance de division de tension côté sortie dont une extrémité est connectée à la deuxième borne de charge (TL2) et une autre extrémité est connectée au nœud de division de tension côté sortie.

11. Procédé de contrôle d'un dispositif d'alimentation électrique (100, 200) comprenant un circuit de correction de facteur de puissance et configuré pour alimenter une charge, le dispositif d'alimentation électrique (100, 200) comprenant : une alimentation CA configurée pour sortir une tension CA entre une première borne d'entrée (TI1) et une deuxième borne d'entrée ; un circuit redresseur (RE) connecté entre la première borne d'entrée (TI1) et la deuxième borne d'entrée (TI2) et configuré pour sortir, entre une première borne d'alimentation (TS1) et une deuxième borne d'alimentation, une tension d'alimentation obtenue en redressant la tension CA fournie par l'alimentation CA ; une première borne de charge (TL1) connectée à une borne côté haut potentiel de la charge et une deuxième borne de charge (TL2) connectée à la deuxième borne d'alimentation et à une borne côté bas potentiel de la charge ; un circuit de détection de tension côté entrée (DI) connecté entre la première borne d'alimentation (TS1) et la deuxième borne d'alimentation, et configuré pour détecter une tension détectée côté entrée sur base de la tension d'alimentation ; un circuit de détection de tension côté sortie (DO) connecté entre la première borne de charge (TL1) et la deuxième borne de charge, et configuré pour détecter une tension détectée côté sortie sur base d'une tension de sortie entre la première borne de charge (TL1) et la deuxième borne de charge ; un enroulement côté primaire (L1) dont une extrémité est connectée à la première borne d'alimentation, l'enroulement côté primaire (L1) étant inclus dans un transformateur (T) ; un enroulement côté secondaire (L2) dont une extrémité est connectée à la deuxième borne d'alimentation, l'enroulement côté secondaire (L2) étant inclus dans le transformateur (T) ; un commutateur principal (SW) dont une extrémité est connectée à une autre extrémité de l'enroulement côté primaire (L1) et une autre extrémité est connectée à la deuxième borne de charge ; un amplificateur d'erreur (X1) configuré pour sortir une tension d'erreur sur base d'une différence entre la tension détectée côté sortie et une tension de référence prédéfinie ; un soustracteur (Z) configuré pour sortir un signal de résultat de soustraction sur base du résultat d'une soustraction de la tension d'erreur moins la tension détectée côté entrée ; un comparateur de sortie (X2) configuré pour sortir un signal de résultat de comparaison sur base du résultat d'une comparaison entre le signal de résultat de soustraction et un signal de minuterie ; et un circuit de bascule (FF) comportant une borne d'initialisation où est entré un signal provenant d'une autre extrémité de l'enroulement côté secondaire (L2), une borne de réinitialisation où est entré le signal du résultat de comparaison, et une borne de sortie où est sorti un signal de contrôle pour ouvrir ou fermer le commutateur principal (SW), le procédé comprenant :
la sortie, par le soustracteur, du signal de résultat de soustraction sur base du résultat de la soustraction de la tension d'erreur moins la tension détectée côté entrée ;
et la sortie, par le comparateur de sortie (X2), du signal du résultat de comparaison sur base du résultat de la comparaison entre le signal de résultat de soustraction et le signal de minuterie.

12. Procédé de contrôle d'un dispositif d'alimentation électrique (100, 200) comprenant un circuit de correction de facteur de puissance et configuré pour alimenter une charge, le dispositif d'alimentation électrique (100, 200) comprenant :
une alimentation CA configurée pour sortir une tension CA entre une première borne d'entrée (TI1) et une deuxième borne d'entrée ; un circuit redresseur (RE) connecté entre la première borne d'entrée (TI1) et la deuxième borne d'entrée, et configuré pour sortir, entre une première borne d'alimentation (TS1) et une deuxième borne d'alimentation, une tension d'alimentation obtenue en redressant la tension CA fournie par l'alimentation CA ; une première borne de charge (TL1) connectée à une borne côté haut potentiel de la charge, et une deuxième borne de charge (TL2) connectée à la deuxième borne d'alimentation et à une borne côté bas potentiel de la charge ; un circuit de détection de tension côté entrée (DI) connecté entre la première borne d'alimentation (TS1) et la deuxième borne d'alimentation, et configuré pour détecter une tension détectée côté entrée sur base de la tension d'alimentation ; un circuit de détection de tension côté sortie (DO) connecté entre la première borne de charge (TL1) et la deuxième borne de charge, et configuré pour détecter une tension détectée côté sortie sur base d'une tension de sortie entre la première borne de charge (TL1) et la deuxième borne de charge ; un enroulement côté primaire (L1) dont une extrémité est connectée à la première borne d'alimentation, l'enroulement côté primaire (L1) étant inclus dans un transformateur (T) ; un enroulement côté secondaire (L2) dont une extrémité est connectée à la deuxième borne d'alimentation, l'enroulement côté secondaire (L2) étant inclus dans le transformateur (T) ; un commutateur principal (SW) dont une extrémité est connectée à une autre extrémité de l'enroulement côté primaire (L1) et une autre extrémité est connectée à la deuxième borne de charge ; un amplificateur d'erreur (X1) configuré pour sortir une tension d'erreur sur base d'une différence entre la tension détectée côté sortie et une tension de référence prédéfinie ; un additionneur (Z2) configuré pour sortir un signal de résultat d'addition sur base d'un résultat d'addition d'un signal de minuterie et de la tension détectée côté entrée ; un comparateur de sortie (X2) configuré pour sortir un signal de résultat de comparaison sur base du résultat d'une comparaison entre le signal de résultat d'addition et la tension d'erreur ; et un circuit de bascule (FF) comportant une borne d'initialisation où est entré un signal provenant d'une autre extrémité de l'enroulement côté secondaire (L2), une borne de réinitialisation où est entré le signal du résultat de comparaison, et une borne de sortie où est sorti un signal de contrôle pour ouvrir ou fermer le commutateur principal (SW), le procédé comprenant :
la sortie, par l'additionneur (Z2), du signal de résultat d'addition sur base du résultat de l'addition du signal de minuterie et de la tension détectée côté entrée ; et
la sortie, par le comparateur de sortie (X2), du signal de résultat de comparaison sur base du résultat de la comparaison entre le signal de résultat d'addition et la tension d'erreur.
